# EUROPÄISCHE PATENTSCHRIFT

(11) **EP 1 760 349 B1**
(45) Veröffentlichungstag und Bekanntmachung des Hinweises auf die Patenterteilung: **03.03.2010**
(21) Anmeldenummer: 06026388.6
(22) Anmeldetag: 27.11.2003
(51) Int. Cl.: F16D 48/06, H02P 6/16

(54) **Vorrichtung zur Überwachung einer Positionsveränderung eines bürstenlosen Elektromotors**
Device for monitoring a position change of a brushless electric motor
Dispositif pour controler une variation de position d'un moteur électrique sans balais

(30) Priorität: 28.11.2002 DE 10255385
(43) Veröffentlichungstag der Anmeldung: 07.03.2007
(62) Teilanmeldung aus: 03767462.9
(73) Patentinhaber: LuK Lamellen und Kupplungsbau Beteiligungs KG, 77815 Bühl (DE)
(72) Erfinder: Reibold, Ekkehard, Dr., 77933 Lahr (DE); Eggert, Thomas, Dr., 76131 Karlsruhe (DE); Kro, Sven-Jostein, N-4462 Hovsherad (NO); Küpper, Klaus, Dr., 77815 Bühl (DE); Dell, Heiko, 77830 Bühlertal (DE); Henneberger, Klaus, Dr., 77815 Bühl (DE); Baehr, Markus, Dr., 77855 Achern (DE)

(56) Entgegenhaltungen:
- DE-A1- 10 054 530
- DE-A1- 19 823 089

## Beschreibung

Die vorliegende Erfindung betrifft eine Vorrichtung zur Überwachung einer Positionsveränderung eines bürstenlosen Elektromotors.

Automatisierte Kupplungen in Fahrzeugen mit einem Antriebsmotor sind bereits bekannt geworden. So ist es beispielsweise möglich, eine automatisierte Kupplung zwischen der Abtriebsseite des Motors und der Eingangsseite eines nachgeschalteten Getriebes vorzusehen, bei dem es sich um ein Handschaltgetriebe, ein automatisiertes Schaltgetriebe oder auch beispielsweise ein Kegelscheibenumschlingungsgetriebe handeln kann.

Die DE19823089 A1 offenbart ein Verfahren und eine Vorrichtung zur Steuerung einer Kupplung, insbesondere zum Nullabgleich einer Wegmessung in der Bewegungsübertragung von einem Aktor zu einer Kupplung, insbesondere einer im Antriebsstrang eines Kraftfahrzeugs zwischen einem Antriebsmotor und einem Schaltgetriebe enthaltenen Kupplung.

Eine solche automatisierte Kupplung wird dann über einen Aktuator in der Form beispielsweise eines Elektromotors oder eines hydraulischen Antriebs angesteuert. Über die geschlossene Kupplung wird das vom Motor stammende Abtriebsmoment in das Getriebe eingeleitet, wobei die Kupplung auch als Anfahrelement wirken kann derart, dass sie bei einem Anfahrvorgang des Fahrzeugs bis zum so genannten Tastpunkt geschlossen werden kann, ab dem dann bei einem weiteren Schließen der Kupplung das von dieser übertragbare Kupplungsmoment zum Anfahren des Fahrzeugs ansteigt.

Die Kenntnis des Tastpunkts ist daher einerseits beim Anfahrvorgang von Bedeutung und andererseits auch bei nachfolgenden Gangwechselvorgängen. Das von der Kupplung übertragbare Kupplungsmoment aufgetragen über der Verfahrposition des Kupplungsaktors oder Kupplungsaktuators bestimmt das übertragbare Kupplungsmoment. Aufgrund von Fertigungstoleranzen, Verschleiß der Reibscheiben der Kupplung oder auch aufgrund von temperaturveränderungsbedingten Verschiebungen im Antriebsstrang verändert sich die Kupplungskennlinie. Da über den Verfahrweg des Aktuators das dem gewünschten Kupplungsmoment entsprechende Kupplungsmoment eingestellt wird und sich aufgrund der vorstehend geschilderten Gegebenheiten die Kupplungskennlinie verändert, ist es zur Vermeidung von Komforteinbußen erforderlich, den Tastpunkt regelmäßig neu zu adaptieren.

Ausgehend hiervon ist es Aufgabe der vorliegenden Erfindung, eine Vorrichtung zur verbesserten Überwachung einer Positionsveränderung eines bürstenlosen Elektromotors zu schaffen.

Zur Ansteuerung des Kupplungsbetätigungsaktors können unterschiedliche Regelparameter Verwendung finden. Als Kupplungsbetätigungsaktor kann beispielsweise ein bürstenloser Elektromotor mit einer inkrementalen Wegmessung eingesetzt werden. Da aufgrund der inkrementalen Wegmessung keine Absolutwegmessung möglich ist, wird zur Bestimmung der Verfahrposition eines solchen Aktors mit einem Vertrauensmaß gearbeitet derart, dass das Vertrauensmaß in die inkrementale Wegmessung in Abhängigkeit von aufgetretenen Fehlerzuständen inkrementiert oder dekrementiert werden kann. Nach der Erfindung ist es daher vorgesehen, dass zur Ansteuerung des Kupplungsbetätigungsaktors Regelparameter verwendet werden, die in Abhängigkeit von dem Vertrauensmaß verändert werden. So ist es beispielsweise möglich, dass in die Regelparameter die Verfahrgeschwindigkeit und/oder die Beschleunigung und/oder die Ansteuerspannung des Kupplungsbetätigungsaktors einfließen.

Diese Regelparameter können dabei innerhalb vorbestimmter oberer und unterer Wertebereichsgrenzen verändert werden, so dass bei einem geringen Vertrauensmaß Regelparameter im Bereich der unteren Wertebereichsgrenzen in Verbindung mit einer niedrigen Dynamik der Verfahrbewegung des Kupplungsbetätigungsaktors verwendet werden und bei einem hohen Vertrauensmaß Regelparameter im Bereich der oberen Wertebereichsgrenzen zum Einsatz kommen, also aufgrund des hohen Vertrauensmaßes der Kupplungsbetätigungsaktor mit einer hohen Dynamik angesteuert wird, also beispielsweise hohen Beschleunigungswerten und einer hohen Verfahrgeschwindigkeit.

Wenn die Kupplung mittels einer hydraulischen Übertragungsstrecke angesteuert wird, dann ist es erforderlich, einen Druckausgleich in der Übertragungsstrecke zwischen dem Kupplungsaktor und der Kupplung durchzuführen, den so genannten Schnüffelvorgang. Da sich im Augenblick des Druckausgleichs eine nicht definierte Stellung bei der Kupplung einstellen könnte, muss diese beim Schnüffelvorgang vollständig geschlossen werden, was einem Aktorverfahrweg von Null entspricht. Da die der Kupplung nachgeschaltete Getriebeeingangswelle Lagerspiel aufweisen kann, ist der Kupplungsnullpunkt nicht fest, sondern hängt vom Antriebsstrangmoment während des Schnüffelvorgangs ab, dem so genannten Schnüffelmoment. Damit wird deutlich, dass der Nullabgleich des Tastpunkts nicht mehr absolut ist, sondern der sich einstellende Zustand von den im Antriebsstrang herrschenden Kräften abhängt, da den Antriebsstrang beaufschlagende Axialkräfte wiederum zu unterschiedlichen Auswirkungen des Axialspiels im Antriebsstrang führen können. Die so auftretenden Verschiebungen verändern die reale Kupplungskennlinie hinsichtlich des Tastpunkts und der Form. In Abhängigkeit von der jeweiligen Betriebssituation des Fahrzeuges liegen im Antriebsstrang des Fahrzeugs unterschiedliche Antriebsstrangmomente während des Schnüffelvorganges vor, so dass für die verschiedenen Schnüffelmomentenbereiche unterschiedliche Tastpunkte und Reibwerte benötigt werden. Die Erfindung schafft nun dadurch Abhilfe, dass die Kupplungskennlinie bzw. deren Adaptionsparameter in Abhängigkeit vom aktuellen Schnüffelmoment angepasst werden.

Nach der Erfindung ist vorgesehen, dass es sich bei dem Kupplungsbetätigungsaktor um einen bürstenlosen Elektromotor handelt. Ein solcher Elektromotor weist in der Regel keinen Absolutwegsensor auf. Die inkrementale Wegmessung bei einem solchen Elektromotor kann mittels einer Analyse der Aktivitäten der Hallsensoren durchgeführt werden.

Da sich das Fahrzeug, dessen Kupplung über einen solchen bürstenlosen Elektromotor angesteuert wird, aber auch in Stillstandsphasen befindet, während deren auch ein den Elektromotor ansteuerndes Steuergerät ausgeschaltet ist, und aber eine Veränderung der Verfahrwegsposition des Elektromotors erhebliche Auswirkungen haben kann, ist es auch erforderlich, eine solche Verfahrwegsveränderung während der Stillstandszeit des bürstenlosen Elektromotors feststellen zu können.

Die Erfindung schafft daher eine Vorrichtung zur Überwachung einer Positionsveränderung eines bürstenlosen Elektromotors, wobei die Vorrichtung Mittel zur Erfassung und Abspeicherung von ersten Hallsensormustern beim Abstellen des Elektromotors besitzt und Mittel zur Erfassung und Abspeicherung von zweiten Hallsensormustern bei der Wiederinbetriebnahme des Elektromotors und eine Auswerteeinrichtung zum Vergleichen der ersten und zweiten Hallsensormuster. Über diesen Vergleich der Hallsensormuster kann die Überwachungsvorrichtung daher eine Positionsveränderung des Elektromotors feststellen, also beispielsweise eine Veränderung der Drehwinkelstellung des Rotors.

Schließlich ist es nach der Erfindung auch vorgesehen, dass die Auswerteeinrichtung der Überwachungsvorrichtung ein Vertrauensmaß erzeugt, das in Abhängigkeit von Fehlerbedingungen dekrementiert wird, so dass nach Unterschreiten einer vorbestimmten Vertrauensmaßschwelle eine Neuinitialisierung erfolgt, also beispielsweise ein Anfahren eines Endanschlags, woraufhin das Vertrauensmaß wieder auf einen dekrementierbaren Ausgangswert zurückgesetzt wird.

Die Erfindung wird im Folgenden anhand der Zeichnung näher erläutert. Diese zeigt in:
- Fig. 1: ein Diagramm des Tastmoments aufgetragen über der Zeit; und
- Fig. 2: ein Ablaufdiagramm zur Erläuterung des erfindungsgemäßen Verfahrens.

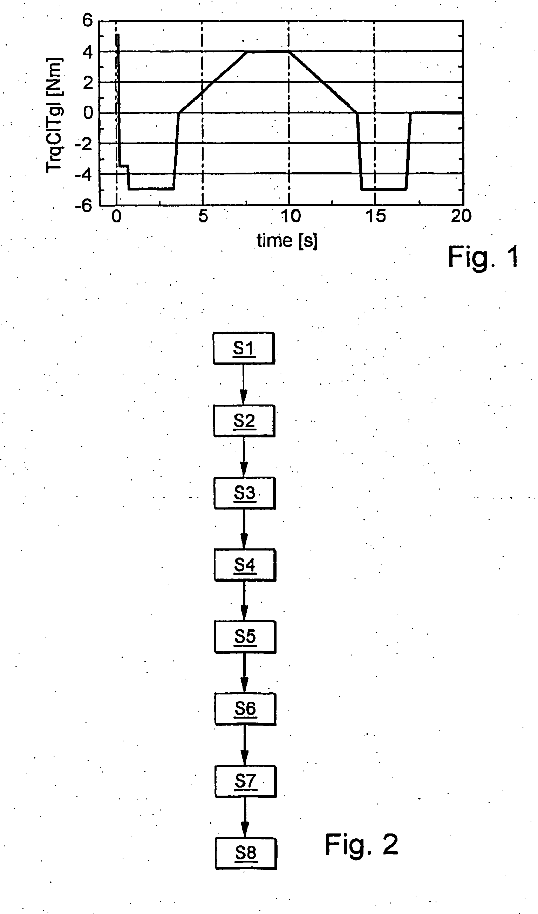

Zu Beginn des in Fig. 1 dargestellten Adaptionszyklus wird zur Bestimmung des Tastpunkts der Kupplungskennlinie bei eingelegtem Gang und betätigter Betriebsbremse zunächst die Kupplung geöffnet und dann das Motorleerlaufmoment ermittelt. In einem nächsten Schritt wird dann die Kupplung bis zu einem Tastmoment von beispielsweise 4 Nm geschlossen und dabei die Reaktion des Motors durch Messung des Motormoments überwacht. Fig. 1 zeigt nun ein zweites Mitteilungsintervall bei geöffneter Kupplung (negatives Kupplungsmoment), wobei während dieses Zeitintervalls das Motorleerlaufmoment nochmals ermittelt wird, so dass aus den beiden Zeitintervallen zur Ermittlung des Motorleerlaufmoments ein Mittelwert gebildet werden kann, der in die Ermittlung des Tastpunkts eingeht, wobei der Tastpunkt auf der Basis der Momentendifferenz aus ermitteltem Motormoment und Motorleerlaufmoment bestimmt wird.

Obwohl in Fig. 1 der Zeichnung das Zeitintervall, zu dem das Tastmoment von etwa 4 Nm anliegt, weitgehend mittig zu den beiden Zeitintervallen, zu denen das Motorleerlaufmoment bestimmt wird, liegt, können diese beiden Zeitintervalle auch in nicht-symmetrischer Weise zum Zeitintervall des Tastmoments gelegt werden, so dass zur Bestimmung des Motorleerlaufmoments auch Interpolationsverfahren herangezogen werden können.

Anhand von Fig. 2 der Zeichnung wird nachfolgend detaillierter auf das Verfahren zur Tastpunktadaptation eingegangen.

Eine Tastpunktsadaption wird dann durchgeführt, wenn im Getriebe des Fahrzeugs eine Gangstufe eingelegt ist und das Gaspedal des Fahrzeugs nicht betätigt ist. Zudem ist als weitere Voraussetzung zu nennen, dass die Betriebsbremse des Fahrzeugs betätigt ist.

In einem ersten Schritt S1 wird die Kupplung mit einer hohen Verfahrgeschwindigkeit durch den Kupplungsbetätigungsaktor in Richtung Öffnen verschoben, so dass sich eine hohe Momentenveränderungsgeschwindigkeit am Kupplungsmoment und damit eine Momentenrampe mit hoher Steigung einstellt. Die Kupplung wird dabei weit geöffnet, befindet sich aber noch nicht am Öffnungsmaximum, es stellt sich ein negatives Kupplungsmoment ein.

In einem Schritt S2 wird das Kupplungsmoment für eine vorbestimmte Zeitdauer gehalten, um einen Einregelungsvorgang der Motordrehzahl auf die Leerlaufdrehzahl abzuwarten. In einem nächsten Schritt S3 wird die Kupplung vollständig geöffnet. Im nächsten Schritt S4 wird wieder ein vorbestimmtes Zeitintervall abgewartet, bis der Kupplungsbetätigungsaktor seine Endposition erreicht hat und sich die Drehzahl des Antriebsmotors wieder stabilisiert hat, da sich diese nach dem vollständigen Öffnen der Kupplung ändern kann. Während einer vorbestimmten Zeitdauer kann dann das Motorleerlaufmoment ermittelt werden. Im nächsten Schritt S5 wird der Kupplungsbetätigungsaktor so angesteuert, dass er die Kupplung mit einer zunächst steilen Momentenrampe verfährt und kurz vor Erreichen des Nulldurchgangs des Kupplungsmoments die Verfahrgeschwindigkeit der Kupplung zum Erreichen einer flachen Momentenrampe reduziert. Dann wird die Kupplung vom Kupplungsbetätigungsaktor mit der erreichten flachen Momentenrampe bis zum Tastmoment von beispielsweise 4 Nm in Richtung Schließen weiter verfahren.

In einem nächsten Schritt S6 wird die Kupplung auf diesem Tastmoment gehalten und zwar für eine vorbestimmte Zeitdauer, während der Nachregelvorgänge der Motorsteuerung zum Erreichen einer stabilen Motordrehzahl möglich sind. Während einer vorbestimmten Zeitdauer kann nun das vom Motor abgegebene Motormoment beispielsweise als Mittelwert während eines vorbestimmten Zeitintervalls bestimmt werden.

In einem nächsten Schritt S7 wird dann das Kupplungsmoment wieder mit einer flachen Momentenrampe bis zu einem Bereitschaftspunkt mit einem Moment von etwa Null verringert und in einem sich hieran anschließenden nächsten Schritt S8 die Kupplung mit einer steilen Momentenrampe vollständig geöffnet. Aus dem während des Schritts S4 ermittelten Motorleerlaufmoment und dem während des Schritts S6 ermittelten Motormoment kann nun ein Adaptionsinkrement bestimmt werden, um das der beim Schließen der Kupplung auf das Tastmoment von beispielsweise 4 Nm angenommene Tastpunkt verschoben werden kann.

Da der vorstehend beschriebene Verfahrensablauf immer dann durchgeführt werden kann, wenn die eingangs benannten Bedingungen erfüllt sind und damit häufig durchgeführt werden kann, kann eine tendenziell in eine Richtung verlaufende Tastpunktsänderung auch zur Veränderung eines längerfristig angenommenen Tastpunkts, der als angenommener Tastpunkt vorstehend auch bereits erläutert wurde, herangezogen werden.

Eine Vorrichtung zur Durchführung des vorstehend beschriebenen Verfahrens weist einen Kupplungsbetätigungsaktor auf und Mittel zur Erfassung des Antriebsmoments des Antriebsmotors zur Bestimmung des Motorleerlaufmoments und des während des Anliegens des Tastmoments abgegebenen Motormoments. Die Vorrichtung weist auch eine Auswerteeinrichtung auf, die das Motorleerlaufmoment und das Motormoment im Tastpunkt vergleicht und daraus den Verfahrweg des Kupplungsbetätigungsaktors zum Erreichung des neuen Tastpunkts ermittelt. Der vorstehend genannte Kupplungsbetätigungsaktor kann beispielsweise einen bürstenlosen Elektromotor aufweisen, dessen Rotordrehwinkelveränderung mittels Hallsensoren festgestellt werden kann. Da eine Veränderung der Verfahrposition des Aktors zu einer Verschiebung der Kupplungskennlinie führen kann, ist die Kenntnis der Positionsveränderung des Elektromotors von Bedeutung, so dass nach der Erfindung eine Vorrichtung zur Überwachung einer Positionsveränderung des genannten bürstenlosen Elektromotors vorgesehen ist.

Mit dieser Vorrichtung werden erste und zweite Hallsensormuster erfasst und gespeichert, wobei die ersten Hallsensormuster beim Abstellen des Elektromotors erfasst und abgespeichert werden und die zweiten Hallsensormuster bei der Wiederinbetriebnahme des Elektromotors und mittels einer Auswerteeinrichtung die beiden Hallsensormuster miteinander verglichen werden, so dass bei der Feststellung einer Abweichung der Hallsensormuster auf eine Positionsveränderung des Elektromotors geschlossen werden kann.

Die vorstehend genannte Auswerteeinrichtung kann ein Vertrauensmaß ermitteln, das in Abhängigkeit von vorbestimmten Fehlerbedingungen dekrementiert wird, so dass nach dem Unterschreiten einer vorbestimmten Vertrauensmaßschwelle eine Neuinitialisierung stattfindet, also der Kupplungsbetätigungsaktor beispielsweise von einem Steuergerät so angesteuert wird, dass er in Richtung eines hinsichtlich der Lage bekannten Endanschlags verfährt und nach Erreichen des Endanschlags ein Reset der Inkrementalwertmessung durchgeführt werden kann und das Vertrauensmaß auf einen Ausgangswert zurückgesetzt werden kann.

Hinsichtlich vorstehend im Einzelnen nicht näher erläuterter Merkmale der Erfindung wird im Übrigen ausdrücklich auf die Ansprüche und die Zeichnung verwiesen.

## Patentansprüche

1. Vorrichtung zur Überwachung einer Positionsveränderung eines bürstenlosen Elektromotors, **gekennzeichnet durch** Mittel zur Erfassung und Abspeicherung von ersten Hallsensormustern beim Abstellen des Elektromotors und Mitteln zur Erfassung und Abspeicherung von zweiten Hallsensormustern bei der Wiederinbetriebnahme des Elektromotors und eine Auswerteeinrichtung zum Vergleichen der ersten und zweiten Hallsensormuster, so dass bei einer Abweichung der Hallsensormuster eine Positionsveränderung des Elektromotors feststellbar ist.

2. Vorrichtung nach Anspruch 1, **dadurch gekennzeichnet, dass** die Auswerteeinrichtung ein Vertrauensmaß erzeugt, das in Abhängigkeit von Fehlerbedingungen dekrementiert wird, so dass nach Unterschreiten einer vorbestimmten Vertrauensmaßschwelle eine Neuinitialisierung erfolgt.

## Claims

1. Apparatus for monitoring a change in the position of a brushless electric motor, **characterized by** means for detecting and storing first Hall sensor patterns when the electric motor is turned off, and means for detecting and storing second Hall sensor patterns when the electric motor is restarted, and an evaluation device for comparing the first and second Hall sensor patterns, so that a change in position of the electric motor can be established when the Hall sensor patterns differ.

2. Apparatus according to Claim 1, **characterized in that** the evaluation device generates a measure of confidence which is decremented as a function of fault conditions, so that reinitialization is performed after a predetermined measure of confidence threshold is undershot.

## Revendications

1. Dispositif pour surveiller un changement de position d'un moteur électrique sans balais, **caractérisé par** des moyens pour acquérir et mémoriser des premiers modèles de capteur à effet Hall lors de l'arrêt du moteur électrique et des moyens pour acquérir et mémoriser des deuxièmes modèles de capteur à effet Hall lors de la remise en service du moteur électrique et un dispositif d'interprétation pour comparer les premiers et les deuxièmes modèles de capteur à effet Hall de manière à pouvoir constater un changement de position du moteur électrique en cas d'écart entre les modèles de capteur à effet Hall.

2. Dispositif selon la revendication 1, **caractérisé en ce que** le dispositif d'interprétation produit un indice de confiance qui est décrémenté en fonction de conditions de défaut de telle sorte que lorsque celui-ci devient inférieur à un seuil d'indice de confiance prédéfini, il se produit une réinitialisation.
